(19) Europäisches Patentamt
European Patent Office
Office européen des brevets

(11) Veröffentlichungsnummer : **0 019 701**
**B1**

# (12) EUROPÄISCHE PATENTSCHRIFT

(45) Veröffentlichungstag der Patentschrift : **11.05.83**

(51) Int. Cl.³ : **C 08 L 55/02**, C 08 K 5/17, C 08 K 5/53

(21) Anmeldenummer : **80101844.1**

(22) Anmeldetag : **05.04.80**

(54) **ABS-Formmassen mit verbesserter Oberfläche und Verwendung von 2-Phosphonobutan-1,2,4-tricarbonsäure-Derivaten zur Verbesserung von ABS-Formmassen.**

(30) Priorität : **20.04.79 DE 2916136**

(43) Veröffentlichungstag der Anmeldung : **10.12.80 Patentblatt 80/25**

(45) Bekanntmachung des Hinweises auf die Patenterteilung : **11.05.83 Patentblatt 83/19**

(84) Benannte Vertragsstaaten : **BE DE FR GB IT NL**

(56) Entgegenhaltungen :
**FR A 2 387 276**
**US A 3 931 074**

(73) Patentinhaber : **BAYER AG**
**Zentralbereich Patente, Marken und Lizenzen**
**D-5090 Leverkusen 1, Bayerwerk (DE)**

(72) Erfinder : **Lindner, Christian, Dr.**
**Riehler Strasse 200**
**D-5000 Köln 60 (DE)**
Erfinder : **Arnold, Bernhard**
**Erft-Strasse 2**
**D-5024 Pulheim (DE)**
Erfinder : **Kuhlmann, Dieter, Dr.**
**Reiher-Weg 31**
**D-5024 Pulheim (DE)**
Erfinder : **Kowitz, Friedrich, Dr.**
**Friedrich-Ebert-Strasse 44**
**D-4047 Dormagen (DE)**
Erfinder : **Ott, Karl-Heinz, Dr.**
**Paul-Klee-Strasse 54**
**D-5090 Leverkusen (DE)**

**EP 0 019 701 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

ABS-Formmassen mit verbesserter Oberfläche und Verwendung von 2-Phosphonobutan-1,2,4-tricarbonsäure-Derivaten zur Verbesserung von ABS-Formmassen

Die Erfindung betrifft thermoplastische Formmassen mit verbesserten Oberflächen- und Verarbeitungseigenschaften aus ABS-Polymeren und 2-Phosphono-butan-1,2,4-tricarbonsäure-Derivaten als Zusätzen.

Eine Stufe bei der Herstellung von ABS-Formmassen ist die Compoundierung, bei der das Pfropfpolymerisat auf Kautschuk und das harzartige Copolymerisat vermischt und gleichzeitig für die Weiterverarbeitung und den Gebrauch notwendige Additive eingearbeitet werden. Additive sind z. B. Gleitmittel, Pigmente, Antistatika, Flammschutzmittel, Stabilisatoren.

Zur Compoundierung verwendet man meist Innenkneter oder zwei- und vierwellige Schneckenkneter, an die ein Zweiwalzenstuhl mit Band-Granulator oder ein Strang- oder Unterwasser-Granulator angeschlossen ist. Die Art des Aggregats richtet sich nach dem ABS-Herstellungsprozess. Fällt z. B. das benötigte Styrol/Acrylnitril-Copolymerisat (« SAN ») als Lösungspolymerisat an, so mischt man mit dem getrennt hergestellten Pfropfkautschukpulver in einem Schneckenkneter ; wird nur in Emulsion polymerisiert, so wird das resultierende Pulver oftmals in einem Innenkneter weiterverarbeitet.

Als Gleitmittel für ABS-Formmassen kommen vorzugsweise in Betracht die Alkali- und Erdalkali-Salze von Fettsäuren, die Fettsäureester von ein- und mehrwertigen Alkoholen, sowie die Amide langkettiger Fettsäuren und Sulfonsäuren ; als Antistatika beispielsweise oxethylierte Alkylamine, Salze der Alkylsulfonsäuren und/oder Polyalkylenoxidpolyole.

Durch Spritzguß erhaltene Formkörper aus ABS-Formmassen, die Gleitmittel und/oder Antistatika enthalten, haben häufig eine mangelhafte, unbefriedigende Oberflächenqualität, besonders, wenn bei hohen Temperaturen gearbeitet wurde. So können beispielsweise schlierenartige Störungen auf glatten Formkörperoberflächen auftreten.

Der vorliegenden Erfindung liegt die Erkenntnis zugrunde, daß durch Zusatz sehr geringer Mengen an 2-Phosphonobutan-1,2,4-tricarbonsäure-Derivaten zu ABS-Formmassen, die übliche Hilfsstoffe enthalten können, die Oberflächengüte wesentlich verbessert wird.

ABS-Formmassen im Sinne der Erfindung sind Mischungen aus :

a) 5-70 Gew.-% eines oder mehrerer Pfropfprodukte auf Basis eines Kautschuks, und
b) 95-30 Gew.-% eines oder mehrerer thermoplastischer Harze.

Als Pfropfprodukte a) werden bevorzugt Polymerisate verstanden, die durch Polymerisation von Pfropfmonomeren in Anwesenheit eines Kautschuks als Pfropfbasis erhalten werden. Der Kautschukanteil liegt dabei in den Grenzen 5-80 Gew.-%, bezogen auf 100 Gew.-Teile ABS-Formmasse und wird in bestimmtem Umfange durch die Wahl des Polymerisationsverfahrens vorgegeben.

Als Pfropfbasis kommen insbesondere Polybutadien, Butadien/Acrylnitril-Copolymerisate, Butadien/Styrol-Copolymerisate (statistische oder Blockcopolymere) in Betracht, verwendbar sind auch Acrylester/Vinylether-Copolymerisate und Ethylen/Propylen-Copolymerisate, einschließlich der Terpolymerisate mit nichtkonjugierten Diolefinen als erster Komponente (EPDM-Kautschuke). Pfropfmonomere sind bevorzugt Styrol, Gemische aus Styrol und Acrylnitril (z. B. im Gewichtsverhältnis 90 : 10 bis 50 : 50), Gemische aus Styrol und Methylmethacrylat (z. B. im Gewichtsverhältnis 5 : 95 bis 95 : 5) und Styrol-Acrylnitril-Methylmethacrylat-Gemische. Die Herstellung solcher Pfropfprodukte ist bekannt.

Das den zweiten Bestandteil der ABS-Formmasse bildende thermoplastische Harz (b) stellt die durchgehende Matrix dar und ist ein Polymerisat oder Copolymerisat von Styrol, α-Methylstyrol, Acrylnitril, Methylmethacrylat und Maleinsäureanhydrid. Bevorzugt sind Polystyrol, Styrol-Acrylnitril-Copolymerisate mit 20 bis 35 Gew.-% Acrylnitril, sowie -Methylstyrol-Acrylnitril-Copolymere mit 20 bis 31 Gew.-% Acrylnitril. Das Gewichtsmittel des Molekulargewichts dieser Harze ist bevorzugt 50.000-550.000. Die molekulare Uneinheitlichkeit, ausgedrückt durch den Wert $M_W/M_n - 1 = U_n$ ($M_W$ = Gewichtsmittel des Molekulargewichts ; $M_n$ = Zahlenmittel des Molekulargewichts), ist bevorzugt 1.0-3.5.

Erfindungsgemäß geeignete Phosphorverbindungen sind Derivate der 2-Phosphono-butan-1,2,4-tricarbonsäure der Formel I

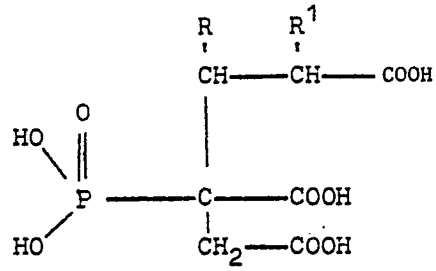

(I)

in welcher R für H, $C_1$-$C_4$-Alkyl oder Carboxyl, und $R_1$ für H oder Methyl steht, wie z. B.

2-Phosphono-butan-tricarbonsäure-(1,2,4) ;
2-Phosphono-3-methyl-butan-tricarbonsäure-(1,2,4) ;
2-Phosphono-butan-tetracarbonsäure-(1,2,3,4) ;
2-Phosphono-3-butyl-4-propyl-tricarbonsäure-(1,2,4) ;
2-Phosphono-butan-tricarbonsäure-(1,2,3) ;
2-Phosphono-pentan-tricarbonsäure-(1,2,3) ;

besonders bevorzugt ist 2-Phosphono-butan-tricarbonsäure-(1,2,4) ; diese Verbindungen sind bekannt und in der DE-AS 20 61 838 beschrieben. Setzt man diese Verbindungen ABS-Formmassen zu, so werden daraus Spritzgußartikel mit ausgezeichneten Oberflächenqualitäten erhalten.

Gegenstand der Erfindung sind demnach thermoplastische Formmassen, bestehend aus 99,99-94 Gew.-%, vorzugsweise 99,99-97 Gew.-%, ABS-Formmasse, 0,01-6,0 Gew.-%, vorzugsweise 0,1-3,0 Gew.-%, 2-Phosphono-butan-1,2,4-tricarbonsäurederivat der Formel I, wobei jeweils bis zu 3,0 %, bezogen auf die gesamte Formmasse, anderer üblicher Additive, wie z. B. Antistatika, Gleitmittel, Flammschutzmittel, anwesend sein können. Bevorzugt sind 0,5-2,0 Gew.-% Antistatika der Formel II

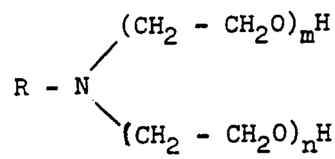

(II)

in der n und m ganze Zahlen von 1-10 bedeuten und R eine $C_1$-$C_{20}$-Alkylgruppe ist.

Gegenstand der Erfindung ist ferner die Verwendung von 0,01-6,0 Gew.-%, vorzugsweise 0,1-1,0 Gew.-%, 2-Phosphono-butan-1,2,4-tricarbonsäurederivat I als Additiv für ABS-Blends.

## Beispiele

A. Herstellung und Charakteristik der ABS-Blends

Für die Herstellung der in den nachfolgenden Beispielen benutzten ABS-Blends wurde folgendes Verfahren benutzt :

Der über Emulsionspolymerisation hergestellt Pfropfkautschuk wird mit einem oder mehreren über Emulsions-polymerisation hergestellten SAN-Copolymerisat in bestimmtem Mengenverhältnis über Latex-Mischung abgemischt. Nach Zugabe einer wäßrigen Stabilisatordispersion — die pro 100 Gew.-Teile Polymer 0,25-1,5 Gew.-Teile eines phenolischen Antioxidants enthält — wird die Latex-Mischung durch Elektrolytzusatz koaguliert. Das resultierende Pulver wird bei einer Temperatur von 70-80 °C im Vakuumtrockenschrank getrocknet.

Für den bei der Blend-Herstellung benutzten ABS-Pfropfkautschuk bzw. SAN-Copolymerisat gelten die in Tabelle 1 und 2 gemachten Angaben.

Tabelle 1 : in den Beispielen benutzter Pfropfkautschuk

| Pfropf-polymer-Bezeichnung | Gew.-Verhältnis Pfropfgrundlage : Pfropfauflage | Gew.-Verhältnis Styrol : ACN in der Monomer-Mischung | mittlerer [1] Teilchen-durchmesser in u | G-Wert [2] | Zusammensetzung [3] der Pfropfgrundlage B |
|---|---|---|---|---|---|
| P 1 | 50 : 50 | 70 : 30 | 0.4 | 0.55 | 100 |

[1] Ultrazentrifugen-Messungen vergl. W. Scholtan, H. Lange, Kolloidz. und Z. Polymere 250 (1972) 783-796 bzw. G. Kämpf, H. Schuster, Angow. Makromol. Chemie 14 (1970) 111-129.
Mit Teilchendurchmesser ist immer der $d_{50}$-Wert gemeint.

[2] Pfropfgrad G (G-Wert) bezeichnet das Verhältnis $\frac{\text{« SAN » gepfropft}}{\text{Pfropfgrundlage}}$ als dimensionslose Zahl.

[3] B = Butadien

Tabelle 2 : in den Beispielen benutzte SAN- und α-Methylstyrol-Acrylnitril-Copolymere

| Copolymerisat Bezeichnung | Copolymerisat-Zusammensetzung (Gew.-%) Styrol ADM α-Methylstyrol | Viskosität [1] $\frac{\eta\ spez.}{C}$ | $U_n$-Wert [2] |
|---|---|---|---|
| S 1 | 74 : 26 | 95 | 3.0 |
| S 1 | 70 : 30 | 110 | 2.5 |

[1] Viskosität = $\frac{\eta\ spez.}{C}$ bei C = 5 g/l MEK, 25 °C

[2] $U_n$-Wert = $\frac{M_w}{M_n}-1$ $M_w$ = Gewichtsmittel der Molmasse, $M_n$ = Zahlenmittel der Molmasse

B. Herstellung der erfindungsgemäßen Formmassen

Für die Herstellung der erfindungsgemäßen Formmassen können alle dem Stand der Technik entsprechende Compoundierungsaggregate verwandt werden, vorausgesetzt, im Temperaturbereich 140-260 °C wird eine homogene Durchmischung erreicht. In Frage kommen u. a. beheizbare Mischwalzwerke mit nachgeschaltetem Granulator, zweiwellige bzw. vierwellige Schneckenkneter mit nachgeschalteter Granuliereinrichtung sowie Innenmischer und Banbury-Mixer mit nachgekoppeltem Zweiwalzenstuhl und Granulator.

Für die Compoundierung auf einem Banbury-Mixer BP (Pomini-Farrel) gelten für ABS-Polyblende die folgenden Mischbedingungen :

Massetemperatur : 190-225 °C
Mischzeiten : 1.5-2 Minuten
Cycluszeiten : 2 -4 Minuten

Nach Beendigung des Mischvorganges fällt das Material als plastische Masse auf einen Zweiwellenstuhl (Walze 1 T = 160 °C, Walze 2 T = 150 °C) und wird in Form eines Bandes abgenommen, das nach Abkühlung granuliert wird.

C. Prüfmethodik

Aus dem Granulat werden im Spritzgußverfahren bei 280 °C Massetemperatur Platten der folgenden Bemessungen (6 × 3,5 × 0,2 cm) hergestellt. Die Prüfung der Oberflächengüte derartiger Prüfkörper erfolgt visuell und wird graduell bewertet.

Beispiele 1-19

Ausgehend von dem Pfropfpolymerisat P 1 sowie dem Harzpolymerisat S 2 wird über Latexmischung ein Blend folgender Zusammensetzung hergestellt :

P 1 400 Gew.-Teile
S 2 600 Gew.-Teile

Die Weiterverarbeitung des Pulvers erfolgt im Banbury- Mixer BK gemäß den unter B) gemachten Angaben.

In der Compoundierungsstufe werden auf 100 Gew.-Teile Pulver zugefügt (Angaben in Gew.-Teilen) :

| Beispiel | 2-Phosphono-butantricarbonsäure-1,2,4, | sonstige Additive A(*) | B(*) | C(*) |
|---|---|---|---|---|
| 1 | — | 2 | — | — |
| 2 | — | 2 | 2 | — |
| 3 | — | 2 | 1,5 | 0,5 |
| 4 | 0,05 | 2 | — | — |
| 5 | 0,05 | 2 | 2 | — |
| 6 | 0,05 | 2 | 1,5 | 0,5 |

(Fortsetzung)

| Beispiel | 2-Phosphono-butan-tricarbonsäure-1,2,4, | A(*) | sonstige Additive B(*) | C(*) |
|---|---|---|---|---|
| 7 | 0,4 | 2 | — | — |
| 8 | 0,4 | 2 | 2 | — |
| 9 | 0,4 | 2 | 1,5 | 0,5 |

(*) A = N,N'-Bis-stearinsäureamid des Ethylendiamins
B = $(C_{14}H_{29})$-$N(CH_2CH_2OH)$ $(CH_2CH_2OCH_2CH_2—OH)$
C = $C_{15}H_{31}—SO_3Na$

Visuelle Beurteilung der aus den ABS-Mischungen 1-9 hergestellten Prüfkörpern nach Abschnitt C :

| ABS-Blend-Mischungen | Oberflächenqualität der Spritzgußteile, visuell beurteilt (*) |
|---|---|
| 1 | – |
| 2 | –– |
| 3 | –– |
| 4 | ++ |
| 5 | + |
| 6 | + |
| 7 | ++ |
| 8 | ++ |
| 9 | ++ |

(*) – Störungen der Oberfläche durch Schlieren.
–– Störungen der Oberfläche durch eine Vielzahl von Schlieren.
\+ Störungen der Oberfläche durch vereinzelte Schlieren.
++ Störungen durch Schlierenbildungen sind nicht festzustellen.

## Beispiele 10-15

Ausgehend von dem Pfropfpolymerisat P 1 und dem Harzpolymerisat S 1 wird über Latexmischung ein Blend folgender Zusammensetzung hergestellt :

P 1 325 Gew.-Teile
S 1 675 Gew.-Teile

Die Weiterverarbeitung des Pulvers erfolgt im Banbury-Mixer BK gemäß den unter B) gemachten Angaben. In der Compoundierungsstufe werden auf 100 Gew.-Teile Pulver zugefügt (Angaben in Gew.-Teilen)

3 Teile Verbindung A
1 Teil Verbindung B
0,5 Teile Polypropylenoxiddiol (Molekulargewicht 2 000, bestimmt durch OH-Zahl-Messung)

Dieses ABS-Polyblend wird nun mit und ohne Zusatz von Phosphonverbindung zu Prüfkörpern, wie unter C) beschrieben, verarbeitet, allerdings bei unterschiedlichen Massetemperaturen im Spritzgußprozeß :

| Beispiel | 2-Phosphono-butan-tricarbonsäure-1,2,4, (Gew-.Teile) | Massetemperatur der Spritzgußverarbeitung (°C) |
|---|---|---|
| 10 | — | 220° |
| 11 | — | 250° |
| 12 | — | 280° |
| 13 | 0,5 | 220° |
| 14 | 0,5 | 250° |
| 15 | 0,5 | 280° |

Visuelle Beurteilung der aus den Mischungen gespritzten Prüfkörpern :

| ABS-Blend-Mischung | Oberflächenqualität der Spritzgußteile, visuell beurteilt |
|---|---|
| 10 | + |
| 11 | – |
| 12 | – – |
| 13 | ++ |
| 14 | ++ |
| 15 | ++ |

Aus den Beispielen 1-15 ist zu erkennen, daß die Oberflächeneigenschaften von mit den gebräuchlichen Additiven ausgerüsteten Spritzgußartikeln aus ABS-Polyblends durch Zusatz geringer Mengen von 2-Phosphono-butan-1,2,4-tricarbonsäure besonders bei hohen Spritzgußmassetemperaturen wesentlich verbessert werden.

**Ansprüche**

1. Thermoplastische Formmasse aus
   a) 99,99-94,0 Gew.-% einer ABS-Formmasse aus

   5-70 Gew.-% einer oder mehrerer Pfropfprodukte auf Basis eines Kautschuks ;
   95-30 Gew.-% eines thermoplastischen Harzes, und

   b) 0,01-6,0 Gew.-% 2-Phosphono-butan-1,2,4-tricarbonsäure-Derivat der Formel I

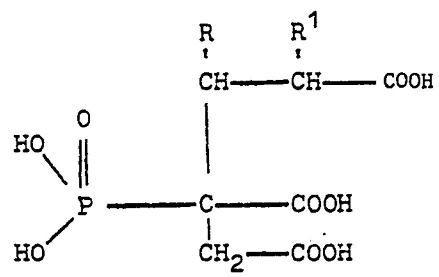

(I)

in der
R Wasserstoff, $C_1$-$C_4$-Alkyl oder Carboxyl, und
$R^1$ Wasserstoff oder Methyl
bedeutet, wobei
c) jeweils bis zu 3,0 Gew.-% (bezogen auf die gesamte Formmasse) üblicher Additive anwesend sein können.

2. Thermoplastische Formmasse nach Anspruch 1, enthaltend als übliches Antistatikum 0,5-2,0 Gew.-% der Verbindung

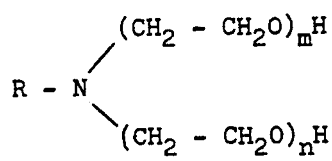

(II)

in der
n und m ganze Zahlen von 1-10 bedeuten und
R eine Alkylgruppe mit 1-20 C-Atomen darstellt.

3. Verwendung von 0,01-6,0 Gew.-% eines 2-Phosphonobutan-1,2,4-tricarbonsäure-Derivates gemäß der Formel in Anspruch 1 als Zusatz für ABS-Formmassen.

**Claims**

1. A thermoplastic moulding composition of
a) 99.99-94.0 % by weight of an ABS moulding composition of

5-70 % by weight of one or more graft products based on a rubber;
95-30 % by weight of a thermoplastic resin, and

b) 0.01-6.0 % by weight of a 2-phosphono-butane-1,2,4-tricarboxylic acid derivative of the formula I

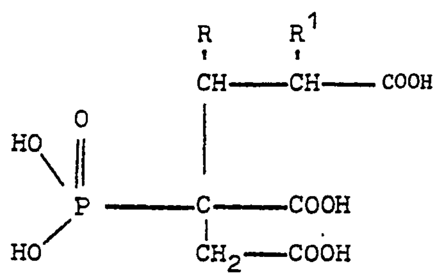

(I)

in which
R denotes hydrogen, $C_1$-$C_4$ alkyl or carboxyl, and
$R^1$ denotes hydrogen or methyl,
it being possible for
c) in each case up to 3.0 % by weight (based on the total moulding composition) of customary additives to be present.

2. A thermoplastic moulding composition according to Claim 1, containing, as a customary antistatic, 0.5-2.0 % by weight of the compound

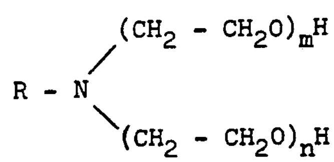

(II)

in which
n and m denote integers from 1-10 and
R represents an alkyl group with 1-20 C atoms.

3. Use of 0.01-6.0 % by weight of a 2-phosphono-butane-1,2,4-tricarboxylic acid derivative according to the formula in Claim 1 as an additive for ABS moulding compositions.

**Revendications**

1. Matière à mouler thermoplastique composée
a) de 99,99 à 94,0 % en poids d'une matière à mouler du type ABS formée de

5-70 % en poids d'un ou plusieurs produits greffés à base d'un caoutchouc;
95-30 % en poids d'une résine thermoplastique,
et
b) de 0,01 à 6,0 % en poids de dérivé d'acide 2-phosphonobutane-1,2,4-tricarboxylique de formule I

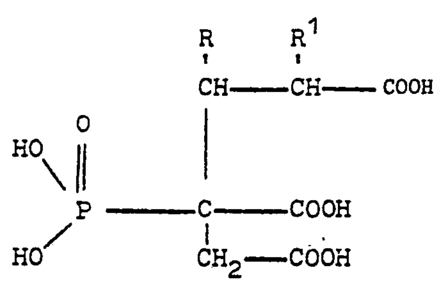

(I)

dans laquelle

R représente l'hydrogène, un groupe alkyle en $C_1$ à $C_4$ ou carboxyle, et

$R^1$ est l'hydrogène ou le groupe méthyle,

c) jusqu'à 3,0 % en poids (par rapport à la matière à mouler totale) d'additifs classiques pouvant être présents dans chaque cas.

2. Matière à mouler thermoplastique suivant la revendication 1, contenant comme agent antistatique classique 0,5 à 2,0 % en poids du composé de formule

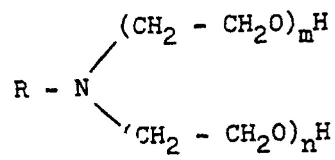

(II)

dans laquelle

n et m sont des nombres entiers de 1 à 10 et

R représente un groupe alkyle ayant 1 à 20 atomes de carbone.

3. Utilisation de 0,01 à 6,0 % en poids d'un dérivé d'acide 2-phosphonobutane-1,2,4-tricarboxylique de la formule indiquée dans la revendication 1 comme additif pour des matières à mouler du type ABS.